# EUROPEAN PATENT APPLICATION

(11) **EP 4 621 732 A1**
(43) Date of publication of application: **24.09.2025**
(21) Application number: 23891094.7
(22) Date of filing: 20.07.2023
(51) Int. Cl.: G06V 10/70, G01D 3/00, G06N 20/00, G06T 7/00

(54) **NOISE PREDICTION METHOD, NOISE PREDICTION SYSTEM, AND PROGRAM**

(30) Priority: 17.11.2022 JP 2022184477
(71) Applicant: Panasonic Intellectual Property Management Co., Ltd., Kadoma-shi, Osaka 571-0057 (JP)
(72) Inventor: HIROTSUNE, Satoshi, Kadoma-shi, Osaka 571-0057 (JP); SATO, Taichi, Kadoma-shi, Osaka 571-0057 (JP); TAKAYANAGI, Shun, Kadoma-shi, Osaka 571-0057 (JP)
(74) Representative: Novagraaf International SA
(86) International application number: PCT/JP2023/026523
(87) International publication number: WO 2024/105932

(57) **Abstract**

A noise prediction method includes: a first obtaining process of obtaining one or more images obtained by image-capturing one or more noise sources (1) and (2) (step S12); and a prediction process of detecting the one or more noise sources (1) and (2) based on the one or more images obtained in the first obtaining process (step S12), and predicting superimposed noise that is noise to be generated by the one or more noise sources (1) and (2) and superimposed on a sensor (3) (step S15).

## Description

### [Technical Field]

The present disclosure relates to a noise prediction method, a noise prediction system, and a program.

### [Background Art]

Devices for measuring noise generated by noise sources, and the like have been known conventionally. Patent Literature (PTL) 1 discloses an information processing device including a microphone.

### [Citation List]

### [Patent Literature]

[PTL 1]
Japanese Unexamined Patent Application Publication No. 2012-78448

### [Summary of Invention]

### [Technical Problem]

However, a problem with the information processing device of PTL 1 is being unable to predict superimposed noise that is noise to be generated by one or more noise sources and superimposed on a sensor.

The present disclosure has been made to solve such a problem and an object of the present disclosure is to provide a noise prediction method, etc., capable of predicting superimposed noise that is noise to be generated by one or more noise sources and superimposed on a sensor.

### [Solution to Problem]

A noise prediction method according to an aspect of the present disclosure includes: a first obtaining process of obtaining one or more images obtained by image-capturing one or more noise sources; and a prediction process of detecting the one or more noise sources based on the one or more images obtained in the first obtaining process, and predicting superimposed noise that is noise to be generated by the one or more noise sources and superimposed on a sensor.

A noise prediction system according to an aspect of the present disclosure includes: an obtainer that obtains one or more images obtained by image-capturing one or more noise sources; and a predictor that detects the one or more noise sources based on the one or more images obtained by the obtainer and predicts superimposed noise that is noise to be generated by the one or more noise sources and superimposed on a sensor.

A program according to an aspect of the present disclosure is a program for causing a computer to execute the above-described noise prediction method.

### [Advantageous Effects of Invention]

According to the present disclosure, the noise prediction method, etc., capable of predicting superimposed noise that is noise to be generated by one or more noise sources and superimposed on a sensor can be provided.

### [Brief Description of Drawings]

[FIG. 1]

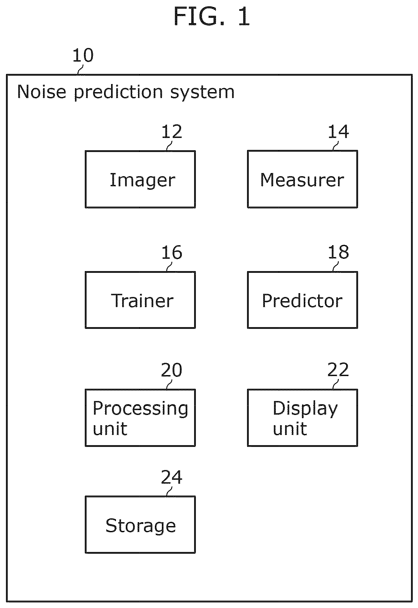

   FIG. 1 is a block diagram illustrating a functional configuration of a noise prediction system according to an embodiment.
[FIG. 2]

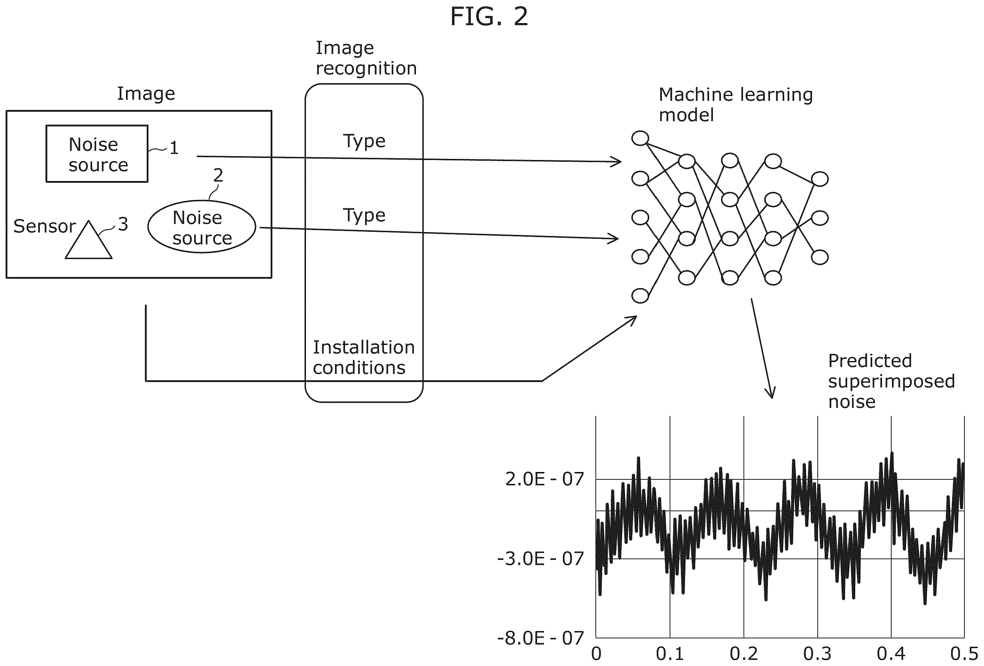

   FIG. 2 is an overview diagram for explaining an example of a noise prediction method using the noise prediction system in FIG. 1.
[FIG. 3]

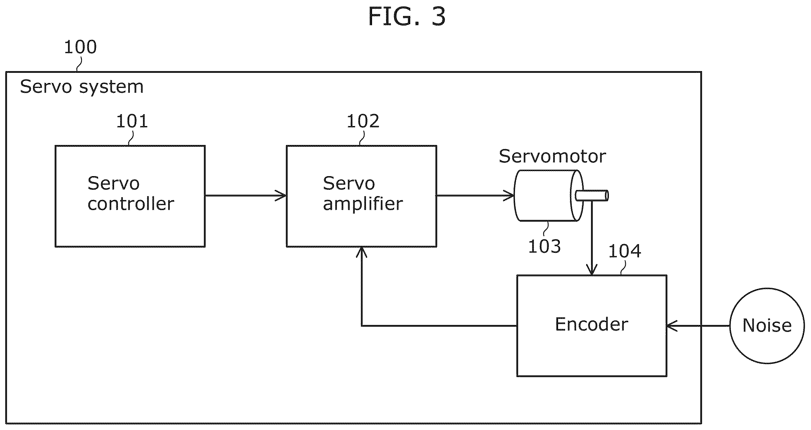

   FIG. 3 is a schematic diagram illustrating an example of a servo system according to the embodiment.
[FIG. 4]

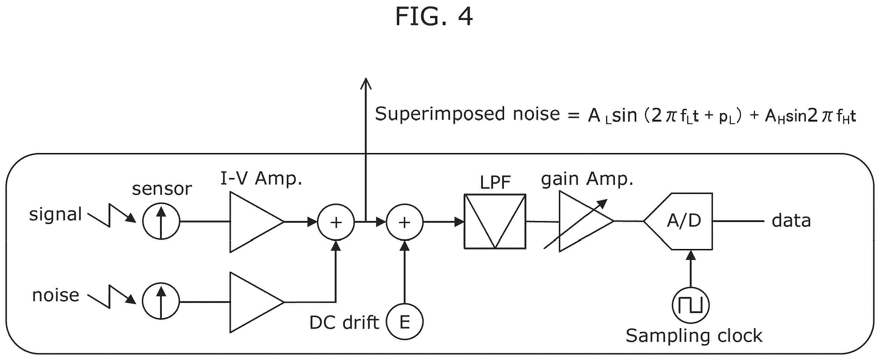

   FIG. 4 is a schematic diagram for explaining an example of superimposed noise that is noise superimposed on a sensor.
[FIG. 5]

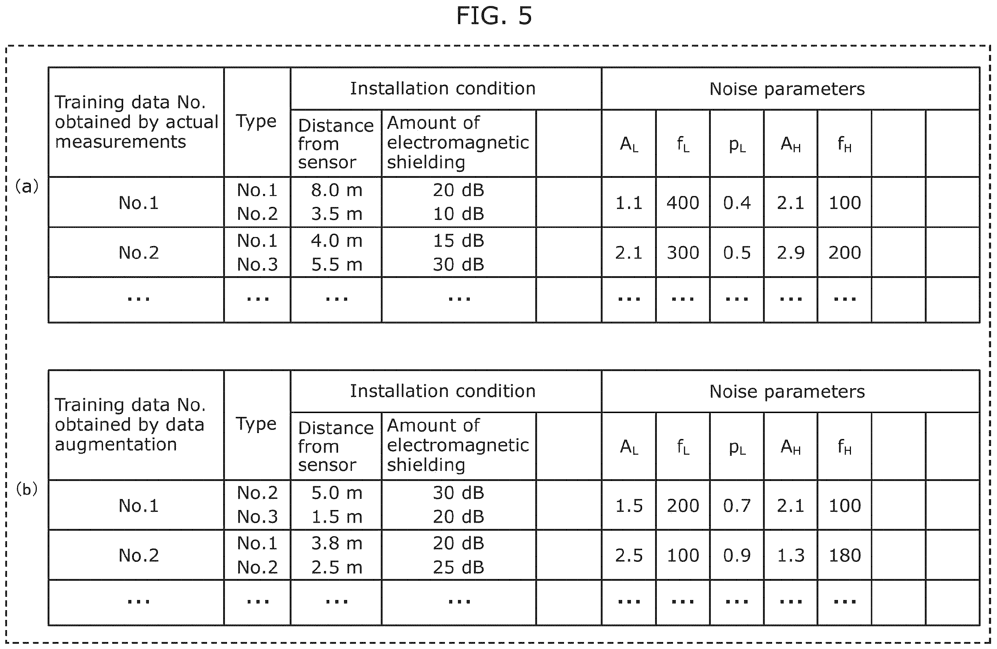

   FIG. 5 is a table showing an example of training data.
[FIG. 6]

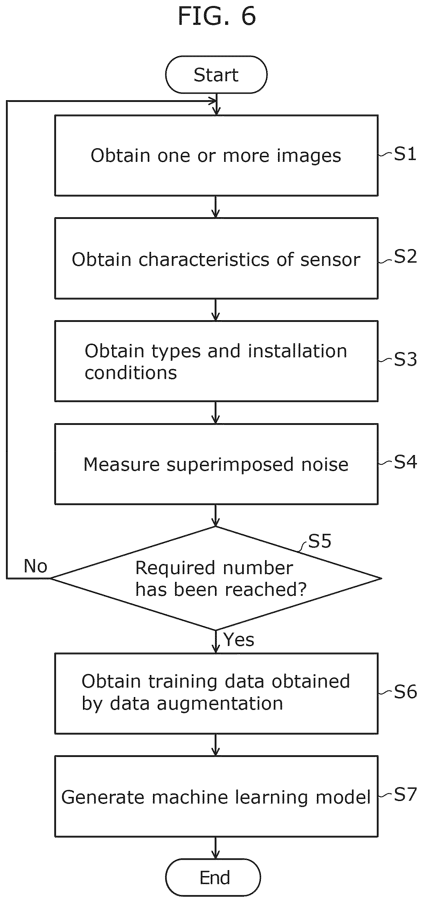

   FIG. 6 is a flowchart showing an example of a training operation in the noise prediction method using the noise prediction system in FIG. 1.
[FIG. 7]

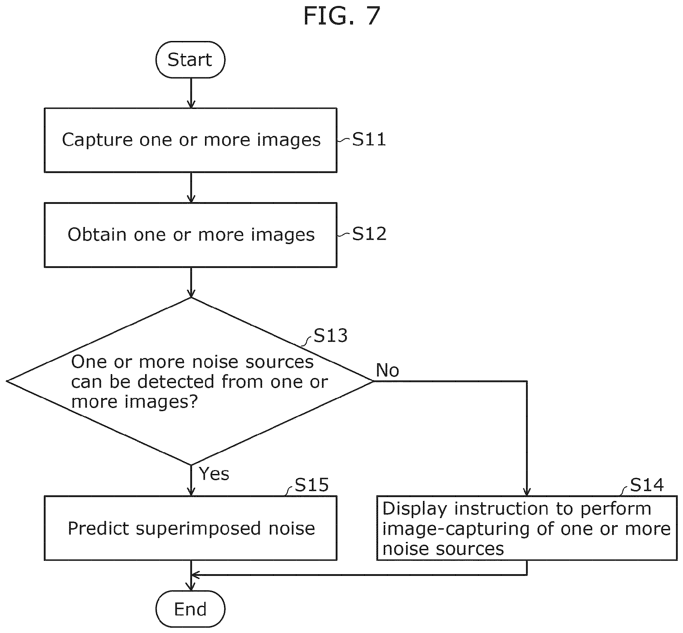

   FIG. 7 is a flowchart showing an example of a prediction operation in the noise prediction method using the noise prediction system in FIG. 1.
[FIG. 8]

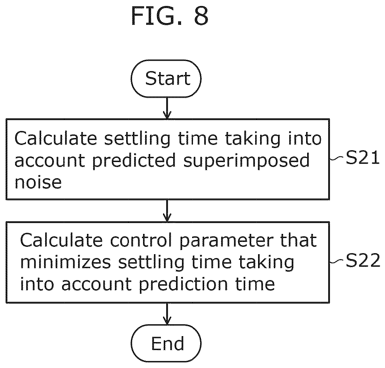

   FIG. 8 is a flowchart showing an example of a processing operation in the noise prediction method using the noise prediction system in FIG. 1.
[FIG. 9]

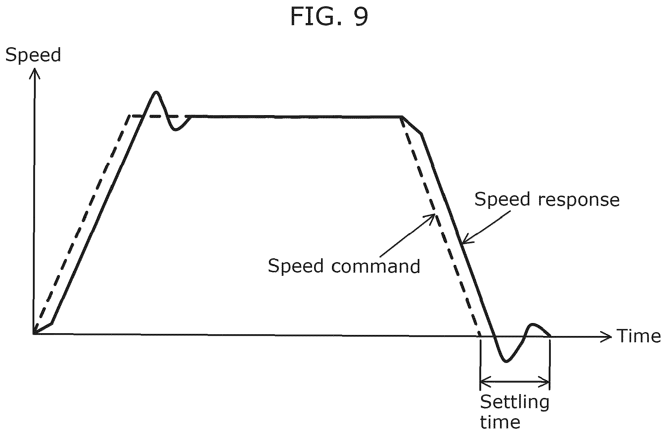

   FIG. 9 is a graph for explaining settling time.
[FIG. 10]

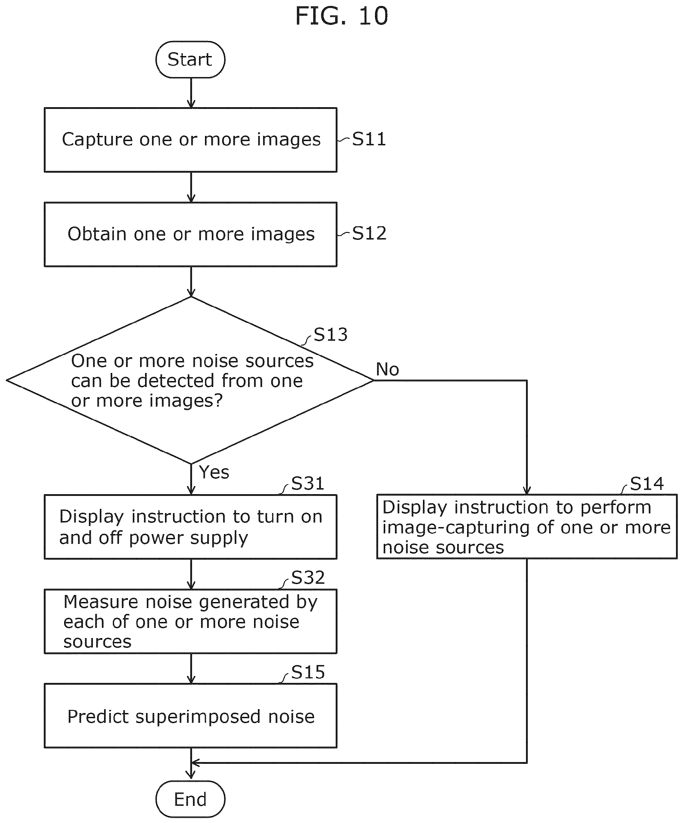

   FIG. 10 is a flowchart showing another example of the prediction operation in the noise prediction method using the noise prediction system in FIG. 1.
[FIG. 11]

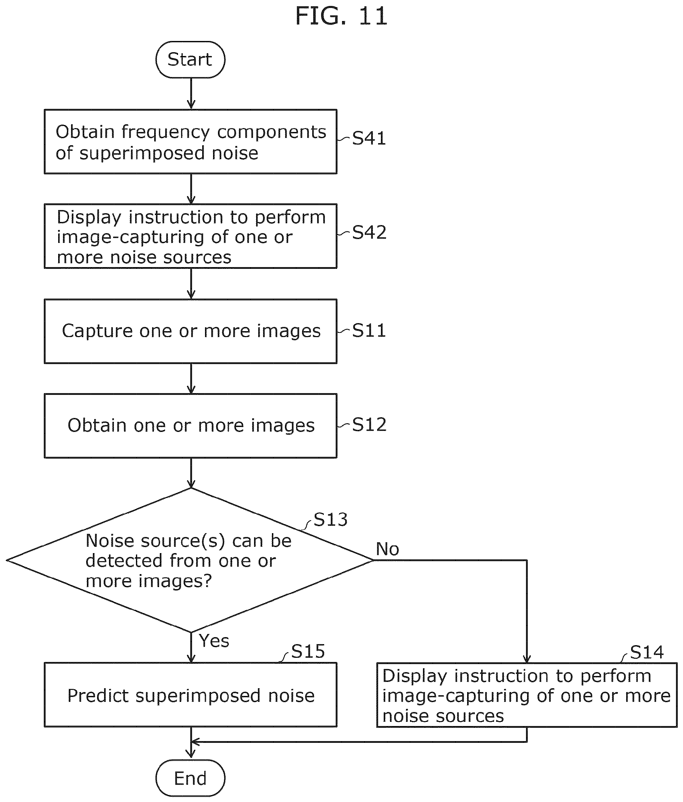

   FIG. 11 is a flowchart showing still another example of the prediction operation in the noise prediction method using the noise prediction system in FIG. 1.

### [Description of Embodiments]

Hereinafter, embodiments of the present disclosure will be described. Each of the embodiments described below shows a specific example of the present disclosure. Hence, the numerical values, elements, the arrangement and connection of the elements, steps, the processing order of the steps, etc. shown in the following embodiments are mere examples, and therefore do not limit the scope of the present disclosure. Therefore, among the elements in the following embodiments, those not recited in any one of the independent claims are described as optional elements.

Moreover, each of the Drawings is a schematic diagram and is not necessarily an illustration drawn in a strict sense. Throughout the Drawings, substantially identical elements are denoted by the same reference numerals, and duplicated descriptions may be omitted or simplified.

### [Embodiment]

FIG. 1 is a block diagram illustrating a functional configuration of noise prediction system 10 according to an embodiment.

Noise prediction system 10 is a system for predicting superimposed noise that is noise to be generated by one or more noise sources 1 and 2 (see FIG. 2) and superimposed on sensor 3 (see FIG. 2). For example, each of one or more noise sources 1 and 2 is a switching power supply, a motor, or the like. The superimposed noise is electromagnetic noise, vibration noise, or the like. The superimposed noise is noise superimposed on a detection signal obtained by sensor 3. In the present embodiment, one or more noise sources 1 and 2 are a plurality of noise sources. When one or more noise sources 1 and 2 are in operation during detection being performed by sensor 3, data measured by sensor 3 will contain superimposed noise. If the superimposed noise can be predicted, data containing no superimposed noise can be estimated. When one or more noise sources 1 and 2 are not in operation during detection being performed by sensor 3, data that can be measured by sensor 3 when one or more noise sources 1 and 2 are activated in the future can be predicted by superimposing the predicted superimposed noise on the data measured by sensor 3. By utilizing the predicted data to determine a normal range, the predicted data can be utilized for abnormality detection. As shown in FIG. 1, noise prediction system 10 includes imager 12, measurer 14, trainer 16, predictor 18, processing unit 20, display unit 22, and storage 24.

Imager 12 performs image-capturing of one or more noise sources 1 and 2. When a switching power supply and a motor are present in the vicinity of sensor 3, for example, a user predicts the switching power supply as noise source 1 and the motor as noise source 2. The user then causes imager 12 to perform the image-capturing of the switching power supply and the motor. Imager 12 may perform the image-capturing of one or more noise sources 1 and 2 so that both of one or more noise sources 1 and 2 appear in a single image. Alternatively, imager 12 may perform the image-capturing of one or more noise sources 1 and 2 so that one or more noise sources 1 and 2 appear in different images. Alternatively, imager 12 may perform the image-capturing of each of one or more noise sources 1 and 2 from various directions to obtain a plurality of images in each of which noise source 1 is present and a plurality of images in each of which noise source 2 is present. For example, imager 12 is a camera. For example, imager 12 captures one or more images using a fisheye lens.

Measurer 14 measures noise. For example, measurer 14 measures superimposed noise that is noise superimposed on sensor 3. Specifically, measurer 14 measures one or more noise parameters of the superimposed noise that is noise superimposed on sensor 3. For example, measurer 14 includes a spectrum analyzer.

Trainer 16 generates a machine learning model that has learned, by using training data including a type of each of one or more noise sources 1 and 2, an installation condition of each of one or more noise sources 1 and 2 relative to sensor 3, and one or more noise parameters of superimposed noise that is noise superimposed on sensor 3, a relationship among the type of each of one or more noise sources 1 and 2, the installation condition of each of one or more noise sources 1 and 2 relative to sensor 3, and the one or more noise parameters of the superimposed noise that is noise superimposed on sensor 3. For example, the type of each of one or more noise sources 1 and 2 is a switching power supply, a motor, or the like. The installation condition of each of one or more noise sources 1 and 2 relative to sensor 3 includes a distance between sensor 3 and each of one or more noise sources 1 and 2, and an amount of noise shielding between sensor 3 and each of one or more noise sources 1 and 2. For example, trainer 16 generates the machine learning model through machine learning using a neural network.

The machine learning model uses training data obtained by data augmentation to learn a relationship among a type of each of one or more noise sources 1 and 2, an installation condition of each of one or more noise sources 1 and 2 relative to sensor 3, and one or more noise parameters of superimposed noise that is noise superimposed on sensor 3. Note that the machine learning model may be trained using only training data obtained by actual measurements, or using only training data obtained by data augmentation, or using both of training data obtained by actual measurements and training data obtained by data augmentation. When a type of each of one or more noise sources 1 and 2 and an installation condition of each of one or more noise sources 1 and 2 relative to sensor 3 are inputted to the machine learning model, the machine learning model predicts and outputs one or more noise parameters of superimposed noise that is noise to be superimposed on sensor 3 when the inputted type of each of one or more noise sources 1 and 2 is installed under the inputted installation condition.

Obtaining the types, obtaining the installation conditions, and obtaining the noise parameters may all be trained by a single deep learning model, or only part of such obtaining may be trained by a deep learning model. Moreover, machine learning other than the deep learning model, image processing, obtaining by a sensor, or input by a user may be used. For example, the types may be obtained using deep learning, the installation conditions may be obtained using a distance sensor and image processing, and the noise parameters may be obtained from a table.

For example, the deep learning uses image classification to learn types of noise sources included in captured images, object detection to learn rectangles containing the noise sources, and semantic segmentation to learn positions of the noise sources in units of pixels. For the learning, data obtained by labeling the captured data may be used, or data collected from the Internet, etc. may be used.

Predictor 18 is an example of an obtainer that obtains one or more images obtained by image-capturing one or more noise sources 1 and 2. Predictor 18 obtains one or more images captured by imager 12. Note that the number of one or more noise sources 1 and 2 needs not match the number of the one or more images. Note also that a single image capturing one or more noise sources 1 and 2 may be obtained, or one or more first images capturing noise source 1 and one or more second images capturing noise source 2 may be obtained. Note that image-capturing including no noise sources may be performed.

Predictor 18 detects one or more noise sources 1 and 2 based on the one or more images obtained by predictor 18, and predicts superimposed noise that is noise to be generated by one or more noise sources 1 and 2 and superimposed on sensor 3. When an image including no noise sources is captured, a prediction that an image of any noise source has not been captured is made.

For example, predictor 18 detects the type of each of one or more noise sources 1 and 2 based on the one or more images. Predictor 18 also detects the installation condition of each of one or more noise sources 1 and 2 relative to sensor 3 based on the one or more images. For example, predictor 18 detects one or more noise sources 1 and 2 based on the one or more images through image recognition using artificial intelligence.

Specifically, when a switching power supply and a motor are present in the one or more images, predictor 18 detects the switching power supply as noise source 1, and detects the motor as noise source 2. In other words, predictor 18 detects the type of noise source 1 as the switching power supply, and detects the type of noise source 2 as the motor. Through image analysis of the one or more images, predictor 18 also detects a distance between sensor 3 and the switching power supply as a distance between sensor 3 and noise source 1, and detects a distance between sensor 3 and the motor as a distance between sensor 3 and noise source 2. Predictor 18 also detects an obstruction between sensor 3 and the switching power supply through the image analysis of the one or more images, detects an amount of noise shielding by the obstruction based on the type of the obstruction, etc., and detects the amount of shielding as an amount of noise shielding between sensor 3 and noise source 1. Predictor 18 also detects an obstruction between sensor 3 and the motor through the image analysis of the one or more images, detects an amount of noise shielding by the obstruction based on the type of the obstruction, etc., and detects the amount of shielding as an amount of noise shielding between sensor 3 and noise source 2. Since predictor 18 has obtained the positional relationship between imager 12 and sensor 3, predictor 18 can detect the installation conditions of one or more noise sources 1 and 2 based on the one or more images.

For example, predictor 18 uses a noise generation pattern registered in advance for the type of each of one or more noise sources 1 and 2 detected based on the one or more images and the installation condition of each of one or more noise sources 1 and 2 relative to sensor 3 to predict the superimposed noise that is noise to be generated by one or more noise sources 1 and 2 and superimposed on sensor 3. Such a noise generation pattern indicates noise characteristics, which are the characteristics of the generated noise.

Specifically, predictor 18, for example, uses the noise generation pattern registered in advance for the switching power supply as a noise generation pattern registered in advance for noise source 1, and uses the noise generation pattern registered in advance for the motor as a noise generation pattern registered in advance for noise source 2. For example, the noise generation pattern of the switching power supply indicates how noise generated by the switching power supply is propagated, and shows a relationship between a distance from the switching power supply and magnitude of the noise generated by the switching power supply at a position that is located the distance away. Similarly, the noise generation pattern of the motor indicates how noise generated by the motor is propagated, and shows a relationship between a distance from the motor and magnitude of the noise generated by the motor at a position that is located the distance away. For example, the noise generation pattern of the switching power supply and the noise generation pattern of the motor are noise generation patterns described in catalogs, etc., and are stored in advance in storage 24.

Predictor 18 uses the noise generation pattern registered in advance for the type of noise source 1 and the installation condition of noise source 1 relative to sensor 3 to predict noise to be generated by noise source 1 and superimposed on sensor 3. Similarly, predictor 18 uses the noise generation pattern registered in advance for the type of noise source 2 and the installation condition of noise source 2 relative to sensor 3 to predict noise to be generated by noise source 2 and superimposed on sensor 3. Predictor 18 adds up the noise to be generated by noise source 1 and superimposed on sensor 3 and the noise to be generated by noise source 2 and superimposed on sensor 3 to predict the superimposed noise that is noise to be generated by one or more noise sources 1 and 2 and superimposed on sensor 3.

For example, by using the machine learning model that has learned the relationship among the type of each of one or more noise sources 1 and 2, the installation condition of each of one or more noise sources 1 and 2 relative to sensor 3, and the one or more noise parameters by using the training data including the type of each of one or more noise sources 1 and 2, the installation condition of each of one or more noise sources 1 and 2 relative to sensor 3, and the one or more noise parameters of the superimposed noise that is noise superimposed on sensor 3, predictor 18 predicts the superimposed noise that is noise to be generated by one or more noise sources 1 and 2 and superimposed on sensor 3.

Specifically, predictor 18, for example, inputs the type of each of one or more noise sources 1 and 2 and the installation condition of each of one or more noise sources 1 and 2 relative to sensor 3 into the machine learning model generated by trainer 16, and predicts noise determined by one or more noise parameters outputted from the machine learning model as superimposed noise that is noise to be generated by one or more noise sources 1 and 2 and superimposed on sensor 3. For example, predictor 18 expresses the predicted superimposed noise as a function. For example, the superimposed noise includes a plurality of frequency components. For example, predictor 18 is implemented by a processor or the like.

Processing unit 20 performs various types of processing. For example, sensor 3 is encoder 104 (see FIG. 3), and processing unit 20 uses the superimposed noise predicted by predictor 18 to perform at least one of calculating an optimal control parameter for controlling servomotor 103 (see FIG. 3) detected by encoder 104 or detecting abnormality in encoder 104. For example, processing unit 20 is implemented by a processor or the like.

Specifically, processing unit 20, for example, calculates the optimal control parameter for controlling servomotor 103 (see FIG. 3) detected by encoder 104 by calculating a control parameter for controlling servomotor 103 so that settling time of servomotor 103 calculated using a detection value outputted from encoder 104 with the superimposed noise predicted by predictor 18 being applied on encoder 104 is minimized.

For example, processing unit 20 performs abnormality detection of encoder 104 by detecting that encoder 104 is abnormal when the detection value outputted from encoder 104 exceeds a detection value that is predicted to be outputted from encoder 104 with the superimposed noise predicted by predictor 18 being applied on encoder 104.

Display unit 22 displays various types of information. For example, display unit 22 is implemented by a display or the like.

For example, display unit 22 displays an instruction to turn on and off a power supply of each of one or more noise sources 1 and 2. For example, display unit 22 displays an instruction to turn on and off the power supply of noise source 1. After the power supply of noise source 1 is turned on and off, display unit 22 displays an instruction to turn on and off the power supply of noise source 2.

For example, display unit 22 displays an instruction to turn on and off the power supply of each of one or more noise sources 1 and 2 in a predetermined order. For example, when the power supply of noise source 1 is determined to be turned on and off after noise source 2, display unit 22 displays the instruction to turn on and off the power supply of noise source 2. After the power supply of noise source 2 is turned on and off, display unit 22 displays the instruction to turn on and off the power supply of noise source 1. The predetermined order indicates an order in which the noise sources are expected to be a noise source for a measurement target. When the measurement target is a product, the predetermined order may be a value determined based on a user survey of the product or a value simulated by a manufacturer of the product. Preferably, the predetermined order is a database, for example, which is configured to be distributed and updated through the Internet. Preferably, a target user can rewrite the predetermined order at one's discretion. A configuration to search for noise sources determines if a noise source is found based on whether noise is reduced by switching its power supply on and off.

For example, display unit 22 displays an instruction to perform the image-capturing of one or more noise sources 1 and 2. When predictor 18 cannot detect one or more noise sources 1 and 2 based on the one or more images, for example, display unit 22 displays the instruction to perform the image-capturing of one or more noise sources 1 and 2.

For example, display unit 22 displays an instruction for a user to enter whether one or more noise sources 1 and 2 are on or off. When such a noise source is on, processing unit 20 obtains noise contained in sensor data obtained in this situation based on a noise generation model and then predicts noise-free data. When such a noise source is off, processing unit 20 obtains, for sensor data obtained in this situation, data that is expected to be obtained mainly when the noise source is turned on based on the noise generation model. The obtained data can be used for abnormality detection. In the configuration to search for noise sources, search is performed until any noise source is found, excluding noise sources with power supplies being off.

For example, display unit 22 displays an instruction to perform the image-capturing of one or more noise sources 1 and 2 based on frequency components of the obtained superimposed noise. For example, based on the frequency components of the obtained superimposed noise, one or more noise sources 1 and 2 are identified to be a switching power supply and a motor, and display unit 22 displays an instruction to perform the image-capturing of the switching power supply and the motor.

Storage 24 stores various types of information. For example, storage 24 is implemented by a memory or the like.

FIG. 2 is an overview diagram for explaining an example of a noise prediction method using noise prediction system 10 in FIG. 1.

As shown in FIG. 2, predictor 18 obtains an image obtained by image-capturing one or more noise sources 1 and 2 and sensor 3.

Predictor 18 detects a type of each of one or more noise sources 1 and 2 and an installation condition of each of one or more noise sources 1 and 2 relative to sensor 3 through image recognition using artificial intelligence.

Predictor 18 inputs the type of each of one or more noise sources 1 and 2 and the installation condition of each of one or more noise sources 1 and 2 relative to sensor 3 to a machine learning model.

When the type of each of one or more noise sources 1 and 2 and the installation condition of each of one or more noise sources 1 and 2 relative to sensor 3 are inputted to the machine learning model, the machine learning model predicts and outputs superimposed noise that is noise to be superimposed on sensor 3.

Predictor 18 predicts the superimposed noise outputted from the machine learning model as superimposed noise that is noise to be generated by one or more noise sources 1 and 2 and superimposed on sensor 3.

FIG. 3 is a schematic diagram illustrating an example of servo system 100 according to the embodiment.

As shown in FIG. 3, servo system 100 includes servo controller 101, servo amplifier 102, servomotor 103, and encoder 104.

Servo controller 101 transmits a command to servo amplifier 102. Servo amplifier 102 controls servomotor 103 based on the command from servo controller 101. Encoder 104 detects the position of servomotor 103.

For example, sensor 3 is encoder 104, and predictor 18 predicts superimposed noise that is noise to be generated by one or more noise sources 1 and 2 and superimposed on encoder 104.

FIG. 4 is a schematic diagram for explaining an example of superimposed noise that is noise superimposed on sensor 3.

As shown in FIG. 4, measurer 14 measures the superimposed noise that is noise superimposed on sensor 3. For example, the superimposed noise is represented by a function such as A_{L}sin(2πf_{L}t + p_{L}) + A_{H}sin2πf_{H}t. A_{L} and A_{H} each denote an amplitude, f_{L} and f_{H} each denote a frequency, and p_{L} denotes a phase. For example, trainer 16 generates a machine learning model trained using the superimposed noise measured by measurer 14.

FIG. 5 is a table showing an example of training data. (a) in FIG. 5 shows a plurality of training data items obtained by actual measurements, and (b) in FIG. 5 shows a plurality of training data items obtained by data augmentation. Note that types of noise sources are each indicated with "No." in FIG. 5. For example, when a type of noise source is a switching power supply, the type is indicated as No. 1. When a type of noise source is a motor, the type is indicated as No. 2.

As shown in FIG. 5, such a training data item includes a type of each of one or more noise sources 1 and 2, an installation condition of each of one or more noise sources 1 and 2 relative to sensor 3, and noise parameters of superimposed noise that is noise generated by one or more noise sources 1 and 2 and superimposed on sensor 3.

For example, the types and the installation conditions in the training data obtained by the actual measurements are inputted by a user, and the one or more noise parameters in the training data obtained by the actual measurements are measured by measurer 14.

For example, types, installation conditions, and one or more noise parameters in training data obtained by data augmentation are inputted by the user. For example, the data augmentation is performed using Maxwell's law. Note that the data augmentation may be performed using artificial intelligence or by the user.

FIG. 6 is a flowchart showing an example of a training operation in the noise prediction method using noise prediction system 10 in FIG. 1.

As shown in FIG. 6, trainer 16 obtains one or more images captured by imager 12 (step S1). Specifically, trainer 16 obtains one or more images capturing one or more noise sources.

Trainer 16 obtains characteristics of the sensor (step S2). For example, the characteristics of the sensor are sensitivity of the sensor, etc.

Trainer 16 obtains types and installation conditions (step S3). For example, trainer 16 uses the one or more images obtained in step S1 to obtain the type and installation condition of each of the one or more noise sources. For example, through image recognition using artificial intelligence, trainer 16 detects the type of each of the one or more noise sources, and detects the installation condition of each of the one or more noise sources. For example, trainer 16 detects a type of obstruction located between the sensor and each of the noise sources, and detects an amount of noise shielding between the sensor and the noise source based on the type of obstruction. For example, such an amount of noise shielding is predetermined for each type of obstruction.

Measurer 14 measures superimposed noise (step S4). Specifically, measurer 14 measures noise parameters of the superimposed noise that is noise generated by the one or more noise sources and superimposed on the sensor.

Trainer 16 determines whether the required number has been reached (step S5). For example, the required number is predetermined by a user or the like.

When the required number has not been reached (No in step S5), imager 12 captures an image(s) again (step S1). Specifically, the user changes at least one of the number of the one or more noise sources, the type of each of the one or more noise sources, or the installation condition of each of the one or more noise sources, and imager 12 performs the image-capturing of the one or more noise sources after the change.

When the required number has been reached (Yes in step S5), trainer 16 obtains training data obtained by data augmentation (step S6). For example, the data augmentation is performed by the user, artificial intelligence, or the like.

Trainer 16 generates a machine learning model using the training data (step S7). Here, trainer 16 generates a machine learning model that has learned a relationship among a type of each of one or more noise sources, an installation condition of each of the one or more noise sources relative to the sensor, and one or more noise parameters by using the training data obtained by the actual measurements and the training data obtained by the data augmentation.

FIG. 7 is a flowchart showing an example of a prediction operation in the noise prediction method using noise prediction system 10 in FIG. 1.

As shown in FIG. 7, imager 12 captures one or more images (image-capturing process) (step S11). For example, imager 12 captures one or more images by image-capturing the interior of a factory where sensor 3 and one or more noise sources 1 and 2 are installed. For example, imager 12 captures the one or more images using a fisheye lens.

Predictor 18 obtains the one or more images captured by imager 12 (first obtaining process) (step S12).

Predictor 18 determines whether one or more noise sources 1 and 2 can be detected from the one or more images (step S13). When a switching power supply and a motor, for example, are shown in the one or more obtained images, predictor 18 determines that one or more noise sources 1 and 2 can be detected. When a switching power supply and a motor, for example, are not shown in the one or more obtained images, predictor 18 determines that one or more noise sources 1 and 2 cannot be detected.

When one or more noise sources 1 and 2 cannot be detected from the one or more images (No in step S13), display unit 22 displays an instruction to perform the image-capturing of one or more noise sources 1 and 2 (second displaying process) (step S14).

When one or more noise sources 1 and 2 can be detected from the one or more images (Yes in step S13), predictor 18 predicts superimposed noise (prediction process) (step S15). Predictor 18 detects one or more noise sources 1 and 2 based on the one or more images obtained in step S12, and predicts the superimposed noise that is noise to be generated by one or more noise sources 1 and 2 and superimposed on sensor 3. Predictor 18 predicts the superimposed noise that is noise to be generated by one or more noise sources 1 and 2 and superimposed on sensor 3 as described above.

Specifically, in step S15, predictor 18 detects a type of each of one or more noise sources 1 and 2 based on the one or more images. In step S15, predictor 18 also detects an installation condition of each of one or more noise sources 1 and 2 relative to sensor 3 based on the one or more images. In step S15, predictor 18 also predicts the superimposed noise that is noise to be generated by one or more noise sources 1 and 2 and superimposed on sensor 3 using a machine learning model that has learned a relationship among a type of each of one or more noise sources 1 and 2, an installation condition of each of one or more noise sources 1 and 2 relative to sensor 3, and one or more noise parameters. In step S15, predictor 18 detects one or more noise sources 1 and 2 based on the one or more images through image recognition using artificial intelligence.

In step S15, predictor 18 expresses the predicted superimposed noise as a function. For example, a case where the type of noise source 1 is a switching power supply, the type of noise source 2 is a motor, the distance between sensor 3 and noise source 1 is 8.0 m, the distance between sensor 3 and noise source 2 is 3.5 m, the amount of shielding between sensor 3 and noise source 1 is 20 dB, and the amount of shielding between sensor 3 and noise source 2 is 10 dB is considered. In this case, when these are inputted to the machine learning model trained using the training data shown in FIG. 5, the machine learning model outputs five noise parameters: A_{L} = 1.1, f_{L} = 400, p_{L} = 0.4, A_{H} = 2.1, and f_{H} = 100. In this case, predictor 18 outputs the superimposed noise that is noise to be generated by one or more noise sources 1 and 2 and superimposed on sensor 3 as a function such as 1.1sin(2n400t + 0.4) + 2.1sin2n100t. As just described, the superimposed noise includes, for example, a plurality of frequency components (f_{L}, f_{H}).

In step S15, predictor 18 may predict the superimposed noise that is noise to be generated by one or more noise sources 1 and 2 and superimposed on sensor 3 by using a noise generation pattern registered in advance for the type of each of one or more noise sources 1 and 2 detected based on the one or more images, and the installation condition of each of one or more noise sources 1 and 2 relative to sensor 3.

FIG. 8 is a flowchart showing an example of a processing operation in the noise prediction method using noise prediction system 10 in FIG. 1. FIG. 9 is a graph for explaining settling time.

As shown in FIG. 8, processing unit 20 calculates settling time taking into account the superimposed noise predicted by predictor 18 (step S21). Specifically, processing unit 20 calculates the settling time using a detection signal of encoder 104 on which the superimposed noise predicted by predictor 18 is applied. As shown in FIG. 9, the settling time is an amount of time from the operation end time of a speed command to the end time of a speed response to the speed command.

Returning to FIG. 8, processing unit 20 calculates a control parameter that minimizes the settling time taking into account the predicted superimposed noise (processing process) (step S22). Calculating the control parameter that minimizes the settling time taking into account the predicted superimposed noise is an example of optimizing the control parameter for controlling servomotor 103 detected by encoder 104. Processing unit 20 may use the predicted superimposed noise to perform abnormality detection of encoder 104 as described above.

FIG. 10 is a flowchart showing another example of the prediction operation in the noise prediction method using noise prediction system 10 in FIG. 1.

As shown in FIG. 10, when one or more noise sources 1 and 2 can be detected from the one or more obtained images (Yes in step S13), display unit 22 displays an instruction to turn on and off a power supply of each of one or more noise sources 1 and 2 (first displaying process) (step S31). For example, in step S31, display unit 22 displays an instruction to turn on and off the power supply of each of one or more noise sources 1 and 2 in a predetermined order.

Measurer 14 measures noise generated by each of one or more noise sources 1 and 2 (step S32). For example, measurer 14 measures noise generated by noise source 1 when noise source 1 is on and noise source 2 is off. Measurer 14 also measures noise generated by noise source 2 when noise source 1 is off and noise source 2 is on.

Predictor 18 predicts superimposed noise (prediction process) (step S15). Predictor 18 predicts the superimposed noise that is noise to be generated by one or more noise sources 1 and 2 and superimposed on sensor 3 based on the noise generated by noise source 1 when noise source 1 is on and noise source 2 is off, the noise generated by noise source 2 when noise source 1 is off and noise source 2 is on, and the installation condition of each of one or more noise sources 1 and 2.

FIG. 11 is a flowchart showing still another example of the prediction operation in the noise prediction method using noise prediction system 10 in FIG. 1.

As shown in FIG. 11, predictor 18 obtains frequency components of superimposed noise that is noise superimposed on sensor 3 (second obtaining process) (step S41). For example, the frequency components of the superimposed noise that is noise superimposed on sensor 3 are measured by measurer 14 while the switching power supply and the motor, for example, are in operation.

Display unit 22 displays an instruction to perform the image-capturing of one or more noise sources 1 and 2 (third displaying process) (step S42). For example, based on the obtained frequency components, predictor 18 determines that the noise generated by the switching power supply and the noise generated by the motor have been superimposed on sensor 3. Predictor 18 then determines the switching power supply to be noise source 1 and determines the motor to be noise source 2, and causes display unit 22 to display an instruction to perform the image-capturing of one or more noise sources 1 and 2.

The noise prediction method according to the embodiment includes: the first obtaining process of obtaining one or more images obtained by image-capturing one or more noise sources 1 and 2 (step S12); and the prediction process of detecting one or more noise sources 1 and 2 based on the one or more images obtained in the first obtaining process (step S12), and predicting superimposed noise that is noise to be generated by one or more noise sources 1 and 2 and superimposed on sensor 3 (step S15).

According to this, one or more noise sources 1 and 2 can be detected based on the one or more images, and the superimposed noise that is noise to be generated by one or more noise sources 1 and 2 and superimposed on sensor 3 can be predicted.

Furthermore, in the noise prediction method according to the embodiment, in the prediction process (step S15), a type of each of one or more noise sources 1 and 2 is detected based on the one or more images.

According to this, since the type of each of one or more noise sources 1 and 2 can be detected based on the one or more images, the superimposed noise that is noise to be generated by one or more noise sources 1 and 2 and superimposed on sensor 3 can be predicted more accurately.

Furthermore, in the noise prediction method according to the embodiment, in the prediction process (step S15), an installation condition of each of one or more noise sources 1 and 2 relative to sensor 3 is detected based on the one or more images.

According to this, since the installation condition of each of one or more noise sources 1 and 2 relative to sensor 3 can be detected based on the one or more images, the superimposed noise that is noise to be generated by one or more noise sources 1 and 2 and superimposed on sensor 3 can be predicted more accurately.

Furthermore, in the noise prediction method according to the embodiment, in the prediction process (step S15), the superimposed noise is predicted using a noise generation pattern registered in advance for the type of each of one or more noise sources 1 and 2 detected based on the one or more images and the installation condition of each of one or more noise sources 1 and 2 relative to sensor 3.

According to this, since the noise generation pattern registered in advance for the type of each of one or more noise sources 1 and 2 detected based on the one or more images and the installation condition of each of one or more noise sources 1 and 2 relative to sensor 3 are used, the superimposed noise that is noise to be generated by one or more noise sources 1 and 2 and superimposed on sensor 3 can be predicted more accurately.

Furthermore, in the noise prediction method according to the embodiment, in the prediction process (step S15), the superimposed noise is predicted using a machine learning model that has learned a relationship among the type of each of one or more noise sources 1 and 2, the installation condition of each of one or more noise sources 1 and 2 relative to sensor 3, and one or more noise parameters of the superimposed noise, the relationship having been learned by using training data including the type of each of one or more noise sources 1 and 2, the installation condition of each of one or more noise sources 1 and 2 relative to sensor 3, and the one or more noise parameters.

According to this, since the machine learning model that has learned the relationship among the type of each of one or more noise sources 1 and 2, the installation condition of each of one or more noise sources 1 and 2 relative to sensor 3, and the one or more noise parameters is used, the superimposed noise that is noise to be generated by one or more noise sources 1 and 2 and superimposed on sensor 3 can be predicted more accurately.

Furthermore, in the noise prediction method according to the embodiment, the machine learning model learns the relationship among the type of each of one or more noise sources 1 and 2, the installation condition of each of one or more noise sources 1 and 2 relative to sensor 3, and the one or more noise parameters using the training data obtained by data augmentation.

According to this, since the training data obtained by the data augmentation is used, the machine learning model can be generated more efficiently.

Furthermore, in the noise prediction method according to the embodiment, in the prediction process (step S15), the superimposed noise predicted is expressed as a function.

According to this, the superimposed noise expressed as the function can be obtained.

Furthermore, in the noise prediction method according to the embodiment, the superimposed noise contains a plurality of frequency components.

According to this, the superimposed noise containing the plurality of frequency components can be predicted.

Furthermore, in the noise prediction method according to the embodiment, in the prediction process (step S15), one or more noise sources 1 and 2 are detected based on the one or more images through image recognition using artificial intelligence.

According to this, since the one or more noise sources can be easily detected, the superimposed noise that is noise to be generated by one or more noise sources 1 and 2 and superimposed on sensor 3 can be easily predicted.

Furthermore, in the noise prediction method according to the embodiment, one or more noise sources 1 and 2 are a plurality of noise sources.

According to this, the superimposed noise that is noise to be generated by the plurality of noise sources 1 and 2 and superimposed on sensor 3 can be predicted.

Furthermore, the noise prediction method according to the embodiment includes the first displaying process of displaying an instruction to turn on and off a power supply of each of the one or more noise sources (step S31).

According to this, the power supply of each of one or more noise sources 1 and 2 is turned on and off, and noise generated by each of one or more noise sources 1 and 2 when the power supply of the noise source is on can be measured. Thus, the superimposed noise that is noise to be generated by one or more noise sources 1 and 2 and superimposed on sensor 3 can be predicted more accurately.

Furthermore, in the noise prediction method according to the embodiment, in the first displaying process (step S31), the instruction to turn on and off the power supply of each of one or more noise sources 1 and 2 is displayed in a predetermined order.

According to this, among one or more noise sources 1 and 2, the power supplies thereof can be turned on and off in order from a noise source generating a larger noise. Thus, the superimposed noise that is noise to be generated by one or more noise sources 1 and 2 and superimposed on sensor 3 can be predicted more efficiently.

Furthermore, the noise prediction method according to the embodiment includes the image-capturing process of capturing the one or more images using a fisheye lens (step S11).

According to this, since an image of a wider area can be captured, the image-capturing of each of one or more noise sources 1 and 2 can be performed more efficiently. Thus, the superimposed noise that is noise to be generated by one or more noise sources 1 and 2 and superimposed on sensor 3 can be predicted more efficiently.

Furthermore, the noise prediction method according to the embodiment includes the second displaying process of displaying an instruction to perform the image-capturing of one or more noise sources 1 and 2 (step S14).

According to this, since the image-capturing of one or more noise sources 1 and 2 can be performed more reliably, the superimposed noise that is noise to be generated by one or more noise sources 1 and 2 and superimposed on sensor 3 can be predicted more efficiently.

Furthermore, the noise prediction method according to the embodiment includes the second obtaining process of obtaining frequency components of the superimposed noise (step S41).

According to this, the superimposed noise that is noise to be generated by one or more noise sources 1 and 2 and superimposed on sensor 3 can be predicted more efficiently.

Furthermore, the noise prediction method according to the embodiment includes the third displaying process of displaying an instruction to perform the image-capturing of one or more noise sources 1 and 2 based on the frequency components obtained in the second obtaining process (step S41) (step S42).

According to this, since the image-capturing of one or more noise sources 1 and 2 can be performed more reliably, the superimposed noise that is noise to be generated by one or more noise sources 1 and 2 and superimposed on sensor 3 can be predicted more efficiently.

Furthermore, in the noise prediction method according to the embodiment, sensor 3 is encoder 104.

According to this, the superimposed noise that is noise to be generated by one or more noise sources 1 and 2 and superimposed on encoder 104 sensor 3 can be predicted.

Furthermore, the noise prediction method according to the embodiment includes the processing process of performing, by using the superimposed noise predicted in the prediction process (step S15), at least one of optimizing a control parameter for controlling servomotor 103 detected by encoder 104 or detecting abnormality in encoder 104 (step S22).

According to this, at least one of optimizing the control parameter for controlling servomotor 103 or detecting abnormality in encoder 104 can be performed.

Furthermore, the noise prediction system according to the embodiment includes: the obtainer (predictor 18) that obtains one or more images obtained by image-capturing one or more noise sources 1 and 2; and predictor 18 that detects one or more noise sources 1 and 2 based on the one or more images obtained by the obtainer (predictor 18) and predicts superimposed noise that is noise to be generated by one or more noise sources 1 and 2 and superimposed on sensor 3.

This provides the same functions and effects as those of the above-described noise prediction method.

Furthermore, the program according to the embodiment is a program for causing a computer to execute the above-described noise prediction method.

This provides the same functions and effects as those of the above-described noise prediction method.

### (Other Embodiments, etc.)

The embodiment has been described above as examples of the techniques disclosed in the present application. However, the techniques according to the present disclosure are not limited to these, and can also be applied to embodiments or variations to which changes, substitutions, additions, omissions, etc. are made as appropriate without materially departing from the spirit of the present disclosure.

The information transmission path in the embodiment described above is provided by way of example, and the present disclosure is not limited to any particular information transmission path. When two devices transmit and receive information via communication in the embodiment described above, a relay device, which is not shown in the figures, may be interposed between the two devices.

In the embodiment described above, the processes to be executed by the specific processing units may be executed by other processing units. Moreover, the executing order of the plurality of processes may be changed, or some of the plurality of processes may be executed in parallel.

Each of the elements in the embodiment described above may be realized by executing a software program suitable for the element. Each of the elements may be realized by means of a program executing unit, such as a CPU or a processor, reading and executing the software program recorded on a recording medium such as a hard disk or a semiconductor memory.

Each of the elements may be configured in the form of a hardware product. For example, each of the elements may be a circuit (or an integrated circuit). These circuits may constitute one circuit as a whole or may be separate circuits. These circuits may each be a general-purpose circuit or a dedicated circuit.

The general or specific aspects of the present disclosure may be implemented using a system, a device, a method, an integrated circuit, a computer program, or a non-transitory computer-readable recording medium such as a CD-ROM. Also, the general or specific aspects of the present disclosure may be implemented using any combination of systems, devices, methods, integrated circuits, computer programs, and recording media.

For example, the present disclosure may be implemented as a method to be executed by a computer of a system on which components are mounted, or a program for causing a computer to execute such a method. The present disclosure may be implemented as a non-transitory computer-readable recording medium having recorded thereon such a program.

### (Supplementary Notes)

The following techniques are disclosed by the description of the above embodiments, etc.

### (Technique 1)

A noise prediction method including:
a first obtaining process of obtaining one or more images obtained by image-capturing one or more noise sources; and
a prediction process of detecting the one or more noise sources based on the one or more images obtained in the first obtaining process, and predicting superimposed noise that is noise to be generated by the one or more noise sources and superimposed on a sensor.

### (Technique 2)

The noise prediction method according to Technique 1,
in which, in the prediction process, a type of each of the one or more noise sources is detected based on the one or more images.

### (Technique 3)

The noise prediction method according to Technique 2,
in which, in the prediction process, an installation condition of each of the one or more noise sources relative to the sensor is detected based on the one or more images.

### (Technique 4)

The noise prediction method according to Technique 3,
in which, in the prediction process, the superimposed noise is predicted using a noise generation pattern registered in advance for the type of each of the one or more noise sources detected based on the one or more images and the installation condition of each of the one or more noise sources relative to the sensor.

### (Technique 5)

The noise prediction method according to Technique 3,
in which, in the prediction process, the superimposed noise is predicted using a machine learning model that has learned a relationship among the type of each of the one or more noise sources, the installation condition of each of the one or more noise sources relative to the sensor, and one or more noise parameters of the superimposed noise, the relationship having been learned by using training data including the type of each of the one or more noise sources, the installation condition of each of the one or more noise sources relative to the sensor, and the one or more noise parameters.

### (Technique 6)

The noise prediction method according to Technique 5,
in which the machine learning model learns the relationship among the type of each of the one or more noise sources, the installation condition of each of the one or more noise sources relative to the sensor, and the one or more noise parameters by using the training data obtained by data augmentation.

### (Technique 7)

The noise prediction method according to Technique 5 or 6,
in which, in the prediction process, the superimposed noise predicted is expressed as a function.

### (Technique 8)

The noise prediction method according to any one of Techniques 5 to 7,
in which the superimposed noise contains a plurality of frequency components.

### (Technique 9)

The noise prediction method according to any one of Techniques 1 to 8,
in which, in the prediction process, the one or more noise sources are detected based on the one or more images through image recognition using artificial intelligence.

### (Technique 10)

The noise prediction method according to any one of Techniques 1 to 9,
in which the one or more noise sources are a plurality of noise sources.

### (Technique 11)

The noise prediction method according to Technique 10, including:
a first displaying process of displaying an instruction to turn on and off a power supply of each of the one or more noise sources.

### (Technique 12)

The noise prediction method according to Technique 11,
in which, in the first displaying process, the instruction to turn on and off the power supply of each of the one or more noise sources is displayed in a predetermined order.

### (Technique 13)

The noise prediction method according to any one of Techniques 1 to 12, including:
an image-capturing process of capturing the one or more images using a fisheye lens.

### (Technique 14)

The noise prediction method according to any one of Techniques 1 to 13, including:
a second displaying process of displaying an instruction to perform the image-capturing of the one or more noise sources.

### (Technique 15)

The noise prediction method according to any one of Techniques 1 to 14, including:
a second obtaining process of obtaining frequency components of the superimposed noise.

### (Technique 16)

The noise prediction method according to Technique 15, including:
a third displaying process of displaying an instruction to perform the image-capturing of the one or more noise sources based on the frequency components obtained in the second obtaining process.

### (Technique 17)

The noise prediction method according to any one of Techniques 1 to 16,
in which the sensor is an encoder.

### (Technique 18)

The noise prediction method according to Technique 17, including:
a processing process of performing, by using the superimposed noise predicted in the prediction process, at least one of calculating an optimal control parameter for controlling a servomotor detected by the encoder or detecting abnormality in the encoder.

### (Technique 19)

A noise prediction system including:
an obtainer that obtains one or more images obtained by image-capturing one or more noise sources; and
a predictor that detects the one or more noise sources based on the one or more images obtained by the obtainer and predicts superimposed noise that is noise to be generated by the one or more noise sources and superimposed on a sensor.

### (Technique 20)

A program for causing a computer to execute the noise prediction method according to any one of Techniques 1 to 18.

### [Industrial Applicability]

The noise prediction method, etc. according to the present disclosure can be used for methods of predicting noise, etc.

### [Reference Signs List]

- 1, 2: noise source
- 3: sensor
- 10: noise prediction system
- 12: imager
- 14: measurer
- 16: trainer
- 18: predictor
- 20: processing unit
- 22: display unit
- 24: storage
- 100: servo system
- 101: servo controller
- 102: servo amplifier
- 103: servomotor
- 104: encoder

## Claims

1. A noise prediction method comprising:
a first obtaining process of obtaining one or more images obtained by image-capturing one or more noise sources; and
a prediction process of detecting the one or more noise sources based on the one or more images obtained in the first obtaining process, and predicting superimposed noise that is noise to be generated by the one or more noise sources and superimposed on a sensor.

2. The noise prediction method according to claim 1,
wherein, in the prediction process, a type of each of the one or more noise sources is detected based on the one or more images.

3. The noise prediction method according to claim 2,
wherein, in the prediction process, an installation condition of each of the one or more noise sources relative to the sensor is detected based on the one or more images.

4. The noise prediction method according to claim 3,
wherein, in the prediction process, the superimposed noise is predicted using a noise generation pattern registered in advance for the type of each of the one or more noise sources detected based on the one or more images and the installation condition of each of the one or more noise sources relative to the sensor.

5. The noise prediction method according to claim 3,
wherein, in the prediction process, the superimposed noise is predicted using a machine learning model that has learned a relationship among the type of each of the one or more noise sources, the installation condition of each of the one or more noise sources relative to the sensor, and one or more noise parameters of the superimposed noise, the relationship having been learned by using training data including the type of each of the one or more noise sources, the installation condition of each of the one or more noise sources relative to the sensor, and the one or more noise parameters.

6. The noise prediction method according to claim 5,
wherein the machine learning model learns the relationship among the type of each of the one or more noise sources, the installation condition of each of the one or more noise sources relative to the sensor, and the one or more noise parameters by using the training data obtained by data augmentation.

7. The noise prediction method according to claim 5 or 6,
wherein, in the prediction process, the superimposed noise predicted is expressed as a function.

8. The noise prediction method according to claim 5 or 6,
wherein the superimposed noise contains a plurality of frequency components.

9. The noise prediction method according to any one of claims 1 to 5,
wherein, in the prediction process, the one or more noise sources are detected based on the one or more images through image recognition using artificial intelligence.

10. The noise prediction method according to any one of claims 1 to 5,
wherein the one or more noise sources are a plurality of noise sources.

11. The noise prediction method according to claim 10, comprising:
a first displaying process of displaying an instruction to turn on and off a power supply of each of the one or more noise sources.

12. The noise prediction method according to claim 11,
wherein, in the first displaying process, the instruction to turn on and off the power supply of each of the one or more noise sources is displayed in a predetermined order.

13. The noise prediction method according to any one of claims 1 to 5, comprising:
an image-capturing process of capturing the one or more images using a fisheye lens.

14. The noise prediction method according to any one of claims 1 to 5, comprising:
a second displaying process of displaying an instruction to perform the image-capturing of the one or more noise sources.

15. The noise prediction method according to any one of claims 1 to 5, comprising:
a second obtaining process of obtaining frequency components of the superimposed noise.

16. The noise prediction method according to claim 15, comprising:
a third displaying process of displaying an instruction to perform the image-capturing of the one or more noise sources based on the frequency components obtained in the second obtaining process.

17. The noise prediction method according to any one of claims 1 to 5,
wherein the sensor is an encoder.

18. The noise prediction method according to claim 17, comprising:
a processing process of performing, by using the superimposed noise predicted in the prediction process, at least one of calculating an optimal control parameter for controlling a servomotor detected by the encoder or detecting abnormality in the encoder.

19. A noise prediction system comprising:
an obtainer that obtains one or more images obtained by image-capturing one or more noise sources; and
a predictor that detects the one or more noise sources based on the one or more images obtained by the obtainer and predicts superimposed noise that is noise to be generated by the one or more noise sources and superimposed on a sensor.

20. A program for causing a computer to execute the noise prediction method according to any one of claims 1 to 5.
